# FASCICULE DE BREVET EUROPEEN

(11) **EP 2 760 557 B1**
(45) Date de publication et mention de la délivrance du brevet: **01.04.2020**
(21) Numéro de dépôt: 12773070.3
(22) Date de dépôt: 25.09.2012
(51) Int. Cl.: B01F 3/10, B01D 11/02, B01F 5/06, C06B 21/00

(54) **PROCEDE D'EXTRACTION DE CHARGES SOLIDES SOLUBLES CONTENUES DANS UNE PATE.**
VERFAHREN ZUR EXTRAKTION VON IN EINER PASTE ENTHALTENEN LÖSLICHEN STOFFEN
PROCESS FOR EXTRACTION OF SOLUBILE FEEDSTOCK CONTAINED IN A PASTE

(30) Priorité: 26.09.2011 FR 1158531
(43) Date de publication de la demande: 06.08.2014
(73) Titulaire: ARIANEGROUP SAS, 75015 Paris (FR)
(72) Inventeur: TAUZIA, Jean-Michel, F-33290 Blanquefort (FR); GIRAUD, Eric, F-33000 Bordeaux (FR); GAUDRE, Marie, F-33185 Le Haillan (FR)
(74) Mandataire: Cabinet Beau de Loménie
(86) Numéro de dépôt international: PCT/FR2012/052133
(87) Numéro de publication internationale: WO 2013/045804

(56) Documents cités:
- EP-A1- 1 790 626
- EP-A2- 1 333 016
- FR-A1- 2 689 042
- US-A- 4 909 868
- US-A1- 2006 070 690
- US-A1- 2011 112 329

## Description

La présente invention a pour objet un procédé d'extraction de charges solides contenues dans une pâte. Elle concerne également un procédé de fabrication d'un matériau chargé (ledit matériau contenant une charge solide) comprenant la préparation d'une pâte intermédiaire et la transformation de ladite pâte intermédiaire en ledit matériau. Ledit procédé d'extraction est opportunément mis en œuvre dans le cadre dudit procédé de fabrication pour le traitement d'au moins une partie de la pâte intermédiaire non transformée.

Le procédé de l'invention est particulièrement adapté à une mise en œuvre à l'échelle industrielle. Il convient pour le traitement de pâtes de matériaux énergétiques. Il est plus particulièrement décrit ci-après en référence au traitement de telles pâtes mais l'homme du métier, à la lecture de ce qui suit, comprend aisément que son champ d'application n'est nullement limité à celui desdites pâtes de matériaux énergétiques.

Les matériaux énergétiques concernés par l'invention sont notamment ceux dédiés aux applications propulsives spatiales et militaires, ceux présents dans les générateurs de gaz pour la sécurité automobile (airbag...) et ceux présents dans les munitions explosives et les explosifs civils.
- Une famille de matériaux énergétiques concernée est celle des propergols et explosifs à liant ; ledit liant constituant une matrice polymérique qui enrobe les charges.

Le liant est préparé à partir d'un pré-polymère liquide, éventuellement énergétique, qui présentent des terminaisons chimiquement réactives (groupes hydroxy, par exemple) appelées à réagir avec au moins un agent de réticulation, lui aussi liquide. On procède généralement comme indiqué ci-après. On mélange le pré-polymère liquide avec les différents ingrédients (charges solides, additifs) du matériau énergétique dans un malaxeur pour obtenir une pâte. L'agent de réticulation, suivant le mode de mise en œuvre du procédé (batch, continu ou semi continu (voir ci-après)), est introduit, soit simultanément aux autres ingrédients du matériau énergétique, soit en cours ou après le malaxage des autres ingrédients du matériau énergétique. La pâte, à l'issue du malaxage, est coulée dans un moule ou extrudée, selon le mode de procédé mis en œuvre. La pâte chargée est alors durcie (réticulée) par cuisson à une température compatible avec la présence des matériaux pyrotechniques. Le pré-polymère réticulé enrobe ainsi tous les ingrédients et notamment les charges pour former le matériau énergétique à la forme désirée.
a) Selon un premier mode de mise en œuvre, le procédé est un procédé discontinu, dit par "batch". Une certaine quantité de pâte est préparée et coulée dans des moules pour l'obtention d'un certain nombre de chargements (dans une première étape, les différents ingrédients sont pesés puis introduits selon un ordre approprié et malaxés pour former la pâte).
b) Selon un second mode de mise en œuvre, le procédé, tel que décrit dans les demandes de brevet EP 1 216 977 et EP 1 741 690, est un procédé continu qui comprend essentiellement un malaxage (continu), dans un mélangeur-extrudeur bi-vis, des ingrédients du matériau énergétique. La pâte constituée est, en sortie du mélangeur, soit extrudée sous la forme de jonc (pour la fabrication de petits objets), soit coulée dans des structures.
c) Selon un troisième mode de mise en œuvre, le procédé, tel que décrit dans la demande de brevet EP 1 333 016, est un procédé dit bi-composant semi-continu. Un mélange de deux groupes de composants est coulé : le premier groupe de composants, sous la forme d'une pâte, représente environ 80 % à environ 99 % en poids du produit fini et comprend essentiellement le pré-polymère, toutes les charges solides et une partie des additifs ; le deuxième groupe de composants, sous la forme d'un liquide, représente environ 20 % à environ 1 % en poids du produit fini et comprend la totalité de l'agent de réticulation et l'autre partie des additifs. Les deux groupes de composants sont mélangés dans un mélangeur statique puis coulés, à la sortie dudit mélangeur, sous la forme d'une pâte dans un(des) moule(s). Selon une variante avantageuse, telle que décrite dans la demande EP 1 790 626, une faible quantité de l'agent de réticulation liquide est incluse dans le premier groupe de composants.

Quel que soit le mode de mise en œuvre du procédé de fabrication de ce type de matériaux énergétiques, les ingrédients se trouvent toujours, à l'état intermédiaire (avant réticulation du pré-polymère liquide, précurseur du liant) sous la forme d'une pâte.
- Une autre famille de matériaux énergétiques concernée par la présente invention est celle des explosifs civils pâteux qui se présentent sous la forme d'une bouillie ou d'un gel. Il s'agit typiquement de compositions (pâtes) à base de nitrate d'ammonium, d'aluminium et d'explosif comme la tolite ou la pentrite, en présence d'un gélifiant ou d'une gomme.

Au cours de la fabrication d'un matériau énergétique, notamment de l'une ou l'autre des deux familles ci-dessus, une partie de la pâte formée (pâte intermédiaire (destinée à être transformée en le matériau final recherché) ou pâte correspondant au matériau final recherché) est inexorablement non utilisée et récupérée en tant que déchet, notamment :
- lors de la vidange et du nettoyage des malaxeurs, et
- lors des phases transitoires de démarrage ou d'arrêt des procédés continus ou semi-continus.

Il se peut aussi que la pâte fabriquée soit non conforme, rebutée et donc aussi récupérée en tant que déchet.

Ainsi, par exemple, les quantités de pâtes de propergol non utilisées (non transformées) dans la suite du procédé peuvent être importantes dans un contexte de production industrielle de propergol. Plusieurs centaines de kilos de pâte peuvent être récupérées en tant que déchet à chaque cycle de production industrielle.

L'extraction des charges (solides) contenues dans ce type de pâte récupérée en tant que déchet est souhaitée :
- soit en raison de la toxicité desdites charges et en vue du traitement de celles-ci;
- soit afin d'inerter sur le plan pyrotechnique ces charges lorsqu'elles présentent un caractère explosible.

L'extraction totale ou partielle des charges (solides) permet aussi d'inerter la pâte résiduelle, lorsque ces charges sont une composante nécessaire, à un certain taux massique, au caractère pyrotechnique de ladite pâte.

Les matériaux énergétiques les plus courants contiennent, à titre de charge oxydante (charge solides), des perchlorates, tels les perchlorates de potassium ou d'ammonium, et/ou des nitrates, tels les nitrates de sodium ou de potassium et/ou à titre de charges explosives des nitramines, tels que l'hexogène ou l'octogène.

A ce jour, à la connaissance de la Demanderesse, aucun procédé d'extraction des charges solides renfermées dans de telles pâtes n'a été développé à l'échelle industrielle. Certes, ils existent des procédés d'extraction par solvant mis en œuvre dans des extracteurs de Soxhlet, plus ou moins perfectionnés, mais lesdits procédés ne sont capables de traiter que de faibles quantités de pâte et ils impliquent un chauffage du solvant, voire une ébullition de celui-ci, *a priori* difficilement compatible avec le traitement de matériaux énergétiques renfermant des charges sensibles. De plus, ces procédés ne permettent pas un traitement en continu de la pâte.

Le traitement de déchets pyrotechniques de propergols solides, à liant plastique réticulé, contenant des charges oxydantes solides du type précisé ci-dessus, a déjà été largement décrit et mis en œuvre.

Ledit traitement comprend :
- la réduction du propergol solide en morceaux de la taille du cm³, par une opération de broyage,
- l'extraction des charges solides (perchlorate d'ammonium et/ou nitrates), par une opération de macération sous eau, et enfin,
- après séparation des phases solide et liquide, le traitement biologique des eaux perchloratées et/ou nitrées.

Cet état de la technique est notamment illustré par les documents FR2689042 et US2006070690.

Bien entendu, pour extraire des charges solides contenues dans une pâte, il serait possible, lorsque ladite pâte contient un liant réticulable, de réticuler préalablement ladite pâte afin d'obtenir un produit solide, puis de soumettre ledit produit solide obtenu au traitement ci-dessus. Ceci parait, à l'évidence, guère performant sur le plan économique, notamment en référence aux infrastructures de stockage intermédiaires.

Bien évidemment, la Demanderesse a aussi pensé à appliquer directement le traitement ci-dessus aux pâtes, notamment aux pâtes réticulables non réticulés. Néanmoins, l'étape de macération mise en œuvre avec lesdites pâtes n'est pas envisageable dans la mesure où le mélange pâte/eau ne peut être réalisé par simple trempage et macération, comme c'est le cas avec les morceaux de propergol solide.

La Demanderesse a donc conçu un procédé de traitement de pâtes de matériaux énergétiques contenant des charges solides, efficace, de mise en œuvre rapide et peu onéreuse, permettant d'extraire lesdites charges solides (solubles) desdites pâtes (avec un solvant desdites charges solides). Ce procédé est évidemment généralisable à tout type de pâte comprenant un type de charge à extraire.

La présente invention concerne donc un procédé d'extraction de charges solides contenues dans une pâte, et plus particulièrement dans une pâte de matériau énergétique. Le procédé de l'invention trouve notamment son application pour les pâtes de matériaux énergétiques contenant comme charges (solides) des perchlorates et/ou des nitrates et/ou des charges explosives.

La présente invention concerne plus précisément un procédé de traitement d'une pâte renfermant une charge solide en vue de l'extraction d'au moins une partie de ladite charge solide. La charge en cause peut être d'un unique type ou consister en un mélange de charges solides de différents types. Le traitement de l'invention peut, dans le contexte de la présence de plusieurs types de charge solide, être mis en œuvre pour une extraction de toutes les charges solides présentes (ensemble), pour une extraction sélective (d'au moins un type de charge solide) ou pour successivement plusieurs extractions sélectives. Quel(s) que soi(en)t le(s) type(s) de charge solide à extraire, on conçoit par ailleurs, que, selon le contexte, une extraction totale n'est pas forcément visée ou, au contraire, que la mise en œuvre de plusieurs extractions du même type, en série, est nécessaire pour parfaire l'extraction en cause. L'objectif est toutefois généralement d'extraire un maximum de la charge solide en mettant en œuvre une unique étape d'extraction.

Le procédé de traitement de l'invention, procédé de traitement d'une pâte renfermant une charge solide (C) en vue de l'extraction d'au moins une partie de ladite charge solide (C), ladite charge solide (C) étant constituée de charges oxydantes choisies parmi des charges de perchlorate d'ammonium, de perchlorate de métal alcalin, de perchlorate de métal alcalino-terreux, de nitrate de métal alcalin, de nitrate de métal alcalino-terreux et leurs mélanges et/ou des charges explosives choisies parmi des charges de CL 20, d'octogène, d'hexogène, de tolite, de pentrite et leurs mélanges comprend, mis en œuvre en continu :
- le mélange, dans un mélangeur statique, de ladite pâte avec un solvant liquide, solvant de ladite au moins une partie de ladite charge solide (C), en vue de la solubilisation, au moins partielle, de ladite au moins une partie de ladite charge solide dans ledit solvant;
- la récupération, à l'issue dudit mélange, d'un système bi-phasique comprenant d'une part, une solution renfermant au moins une fraction de ladite au moins une partie de ladite charge solide, solubilisée dans ledit solvant et d'autre part, un résidu solide de ladite pâte ; et
- la séparation de ladite solution et dudit résidu de ladite pâte.

Le procédé de traitement de l'invention - continu (ce caractère continu dudit procédé de l'invention rendant particulièrement intéressante sa mise en œuvre à l'échelle industrielle) - comprend donc un procédé d'extraction par solvant qui met en œuvre un solvant liquide. Ledit solvant liquide convient pour solubiliser les(des) charges solides renfermées dans la pâte. Ledit solvant (solvant des charges à extraire) est un solvant unique ou un mélange (de solvants, d'un solvant et d'au moins un autre composé, ...). Il est bien évidemment sélectionné au vu de la nature des charges solides à extraire (à dissoudre en son sein).

En référence au couple charge solide à extraire/solvant liquide, l'homme du métier comprend que de nombreux cas de figure existent.

Si la pâte à traiter renferme un unique type de charge (perchlorate d'ammonium, par exemple), un solvant de cet unique type de charge (eau, par exemple) intervient et, au cours du mélange, il assure la solubilisation, au moins partielle, des charges de cet unique type. Pour parfaire (si nécessaire) l'extraction de cet unique type de charge, le traitement peut être renouvelé (au moins une fois) sur au moins une partie du résidu solide obtenu. Le résidu solide obtenu peut ainsi, selon une première variante, être soumis (au moins en partie) au même traitement (avec mélange dans un second mélangeur alimenté en ledit résidu et en ledit solvant, monté en série avec le premier mélangeur alimenté en ladite pâte et ledit solvant) et générer un autre résidu solide qu'il est encore possible de traiter selon l'invention : n extractions successives de l'invention peuvent ainsi être mises en œuvre). Selon une autre variante, au moins une partie du résidu solide peut être recyclé (dans le mélangeur alimenté en pâte et solvant).

Si la pâte à traiter renferme plusieurs types de charge, s'il existe un solvant commun à ces plusieurs types de charges et si l'extraction souhaitée est celle de tous ces types de charges (ensemble), ledit solvant peut être utilisé et, au cours du mélange, il assure la solubilisation, au moins partielle, des charges présentes (de plusieurs types). Dans ce cas de figure également (plusieurs types de charge et un solvant commun à tous ces types de charges), pour une optimisation de l'extraction, la mise en œuvre de plusieurs extractions successives (la première générant un résidu (solide) sur lequel une nouvelle extraction est mise en œuvre...) peut être souhaitée. De la même façon, selon une autre variante, on peut recycler au moins une partie du résidu solide obtenu (dans le mélangeur alimenté en pâte et solvant).

Si la pâte à traiter renferme plusieurs types de charge, s'il est souhaité une extraction sélective et qu'un solvant existe pour la mise en œuvre d'une telle extraction sélective, un tel solvant sélectif est utilisé et, au cours du mélange, il assure la solubilisation, au moins partielle, d'une partie seulement de la charge. On conçoit qu'il est ainsi possible de mettre en œuvre successivement (au sein de mélangeurs montés en série) des extractions sélectives (chacune desdites extractions sélectives pouvant, si nécessaire, comporter plusieurs étapes (voir ci-dessus)), avec des solvants sélectifs, pour des mises en solution successives de différents types de charge. Ainsi, le procédé de l'invention peut-il être mis en œuvre avec un premier solvant pour l'obtention d'un premier résidu solide et d'une solution refermant au moins une fraction d'une partie de ladite charge et comprendre, en outre, un même traitement dudit premier résidu solide obtenu avec un second solvant pour l'extraction d'au moins une fraction d'une autre partie de ladite charge.

La pâte traitée selon le procédé de l'invention (= le résidu (solide) obtenu) peut donc l'être à nouveau, comme indiqué ci-dessus. De manière générale, au moins une partie du résidu de pâte récupéré, séparé de la phase liquide, si elle renferme encore au moins une fraction substantielle d'au moins une partie de la charge solide de la pâte de départ, peut subir à nouveau un traitement par le procédé de l'invention, indépendamment du premier traitement ou dans le cadre de celui-ci.

Ainsi, le procédé de l'invention peut comprendre un premier traitement tel que précisé ci-dessus et, en outre, un second même traitement d'au moins une partie du résidu obtenu à l'issue dudit premier traitement, ledit second traitement étant mis en œuvre indépendamment dudit premier traitement ou après recyclage d'au moins une partie dudit résidu, i.e. en même temps que ledit premier traitement. Ainsi, on peut donc mettre en œuvre (au moins) deux traitements de l'invention successifs, en vue de parfaire l'extraction d'un unique type de charge ou l'extraction commune de plusieurs types de charge : le premier sur la pâte de départ et le second, indépendamment, sur le résidu ou le premier sur la pâte de départ et le second sur un mélange de pâte de départ (non traitée) et de résidu recyclé.

De la même façon, on peut mettre en œuvre au moins deux extractions successives avec des solvants différents pour des extractions sélectives de différents types de charge.

Quelle que soit la variante exacte de mise en œuvre de la première étape du procédé de l'invention (étape clé sur laquelle nous revenons plus loin dans le présent texte), à l'issue de ladite première étape, on récupère d'une part, une solution renfermant au moins une fraction de la au moins une partie de la charge solide, solubilisée dans le solvant, et d'autre part, un résidu (solide) de la pâte ; le tout constituant un système bi-phasique (Liquide/Solide). Les éléments constitutifs de ce système bi-phasique sont ensuite séparés, généralement par (simple) décantation ou par centrifugation, avantageusement par (simple) décantation.

La solution obtenue (séparée de la phase solide, par exemple par surverse) peut ensuite être traitée par tout procédé susceptible de la purifier ou de la valoriser.

Le résidu (solide) de pâte traitée selon l'invention (avec éventuellement renouvellement du traitement) peut également être récupéré puis traité par la voie la mieux adaptée. Si la pâte résiduelle est inerte, c'est-à-dire si elle ne présente plus de caractère pyrotechnique, après extraction totale ou partielle de la charge de la pâte de départ, elle peut être ensuite manipulée et traitée sans précaution particulière, par des procédés classiques.

Lors de la première étape du procédé de l'invention, de façon caractéristique, un mélange pâte/solvant est donc mis en œuvre pour une solubilisation, au moins partielle (l'homme du métier connait les limites de toute solubilisation) de la charge solide de ladite pâte dans ledit solvant. On solubilise d'autant mieux ladite charge que la nature du solvant et la qualité du mélange sont optimisées.

La nature du solvant est évidemment adaptée à, généralement optimisée en fonction de, la nature de la (partie de la) charge solide à extraire. Le solvant peut notamment consister (essentiellement) en de l'eau (contexte de l'extraction de perchlorates et/ou nitrates) ou en un solvant organique, tel l'acétate d'éthyle ou l'acétone (contexte de l'extraction des nitramines). On précise ci-après, de façon nullement limitative, des couples charge/solvant.

La qualité du mélange dépend elle essentiellement de la viscosité de la pâte traitée et du type de mélange mis en œuvre.

L'homme du métier a compris que les pâtes en cause, notamment les propergols fortement chargés, peuvent présenter une viscosité relativement importante. Il conçoit toutefois aisément que leur viscosité peut être abaissée par chauffage. Les pâtes peuvent en effet être chauffées en amont et/ou lors de leur mélange avec le solvant. Le solvant peut aussi être utilisé chaud. On insiste toutefois ici sur le fait que de tels chauffages éventuels ne sont en rien comparables à celui requis selon les techniques de l'art antérieur pour la vaporisation du solvant. Dans le cadre de la mise en œuvre de la première étape du procédé de l'invention, le solvant est liquide. Les pâtes chargées, traitées selon le procédé de l'invention (i.e. dans les conditions de mise en œuvre (tout particulièrement de température) du mélange), présentent généralement une viscosité (Brookfield) comprise entre 50 et 2000 Pa.s.

Le mélange de la pâte chargée et du solvant est avantageusement réalisé dans un mélangeur statique. Pour la réalisation du mélange dans un tel mélangeur, la pâte chargée et le solvant sont généralement introduits dans ledit mélangeur sous pression (la pression au niveau des deux introductions étant la même) ; ceci plus particulièrement lorsque ladite pâte présente une forte viscosité. Ainsi, le mélange de la pâte et du solvant est très avantageusement réalisé dans un mélangeur statique alimenté en ladite pâte et ledit solvant sous (une même) pression. Une telle introduction des « réactifs » sous pression permet d'alimenter ledit mélangeur de façon continu et parfaitement régulière. Compte tenu de la viscosité de la pâte (qui peut poser des problèmes pour son pompage) et afin d'éviter des sollicitations mécaniques trop importantes de celle-ci, tout particulièrement lorsqu'il s'agit d'une pâte pyrotechnique, les pressions d'introduction du solvant et de ladite pâte pyrotechnique dans le mélangeur statique restent généralement inférieures ou égales à 15.10⁵ Pa (15 bars).

La pâte et le solvant peuvent être introduits séparément ou ensemble, après un pré-mélange, dans le mélangeur, avantageusement le mélangeur statique.

Ainsi, selon une variante, ladite pâte et ledit solvant sont introduits séparément dans le mélangeur. Ledit solvant et ladite pâte sont, selon cette variante, avantageusement introduits en différents points radiaux de la bouche d'entrée du mélangeur, ce afin d'obtenir une répartition d'injection homogène à l'entrée du mélangeur.

Selon une autre variante, ladite pâte et ledit solvant sont prémélangés, généralement sommairement, par exemple par circulation dans une canalisation débouchant dans le mélangeur. Le pré-mélange de ladite pâte et dudit solvant est ensuite introduit dans le mélangeur.

Le procédé de traitement de l'invention peut être mis en œuvre à température ambiante (20-25°C) ou, avantageusement, au moins en partie, à une température supérieure à la température ambiante (20-25°C) (i.e. avec chauffage) afin de faciliter la circulation de la pâte (voir ci-dessus) ou (et) le mélange (voir ci-dessus) de ladite pâte avec le solvant, voire le pré-mélange et le mélange de ladite pâte avec ledit solvant, en diminuant la viscosité de ladite pâte. Le solvant ou (et) la pâte peu(ven)t ainsi être chauffé(s) en amont de leur mélange ou (et) au cours dudit mélange.

A l'issue du procédé, la solution et le résidu de pâte sont séparés. Avantageusement ils sont mis en décantation pour séparation. Le bac de décantation peut être chauffé ou refroidi selon les paramètres de température favorables à ladite décantation. Après décantation, ladite solution surnage au-dessus dudit résidu de pâte et peut être récupérée, par exemple par surverse.

Le procédé de l'invention convient tout à fait pour le traitement des pâtes de matériaux énergétiques contenant des charges solides solubles comme le perchlorate d'ammonium et/ou les perchlorates et nitrates de métaux alcalins ou alcalino terreux, tels le perchlorate de potassium et le nitrate de sodium. Les matériaux énergétiques contenant ce type de charges solides solubles sont typiquement les propergols pour applications spatiales ou militaires (de type : liant plastique/perchlorate d'ammonium/Al) ou pour utilisation en générateur de gaz pour airbag. Pour ce type de charges solides solubles, le solvant le mieux adapté pour la mise en œuvre du procédé de l'invention est l'eau, car elles y sont très solubles. Les saumures (solutions) issues du traitement selon l'invention de ce type de pâte peuvent être biologiquement purifiées par nitrification/dénitrification et réduction des ions perchlorates selon les technologies décrites dans les demandes de brevet FR 2 788 055 et EP 2 285 745.

Des pâtes de matériaux énergétiques contenant des charges solides solubles explosives telles que, par exemple, le CL20, l'octogène, l'hexogène peuvent aussi être traitées par le procédé de l'invention. On choisit avantageusement le solvant le plus performant, c'est-à-dire avantageusement un solvant dans lequel la charge est très soluble. Pour les charges identifiées ci-dessus, on utilise avantageusement l'acétate d'éthyle ou l'acétone.

On rappelle, de manière générale, que le procédé de l'invention est particulièrement adapté au traitement de pâtes énergétiques mais que son champ d'application n'est pas limité au traitement de ce type de pâte.

Ledit procédé de l'invention convient tout particulièrement pour le traitement de pâtes énergétiques renfermant des charges solides telles que:
- des charges de perchlorate d'ammonium, de perchlorate ou nitrate de métal alcalin ou alcalino-terreux, et leurs mélanges ; et/ou
- des charges explosives, telles le CL20, l'octogène, l'hexogène, la tolite, la pentrite et leurs mélanges.

Ledit procédé de l'invention est généralement mais non exclusivement mis en œuvre avec, à titre de solvant, de l'eau ou un solvant organique. Ledit solvant organique consiste avantageusement en de l'acétate d'éthyle ou de l'acétone.

On se propose de donner ci-après quelques précisions sur des dispositifs convenant à la mise en œuvre du procédé de l'invention, tel que décrit ci-dessus.

Selon une variante préférée, un tel dispositif comprend (au moins) un mélangeur statique. Selon un premier mode de réalisation, deux canalisations débouchent dans la bouche d'entrée dudit mélangeur statique assurant pour la première, l'introduction de la pâte chargée et pour la deuxième, l'introduction du solvant, dans ledit mélangeur statique. Ladite pâte et ledit solvant sont stockés, en amont, dans des récipients séparés. Ils sont injectés en continu dans lesdites canalisations puis dans le malaxeur statique à l'aide de pompes ou de pistons. L'extrémité de la canalisation véhiculant le solvant dans la bouche d'entrée dudit mélangeur est avantageusement munie d'un répartiteur, par exemple en forme de pomme d'arrosoir ou à branches étoilées ; l'extrémité de la canalisation véhiculant la pâte étant agencée de façon à introduire ladite pâte, dans la bouche d'entrée dudit malaxeur statique, autour dudit répartiteur. Selon un deuxième mode de réalisation, la pâte et le solvant, stockés, en amont, dans des réservoirs séparés, sont injectés, au moyen de pompes ou de piston, respectivement, dans une première et deuxième canalisations, débitant toutes les deux dans une troisième canalisation reliée à la bouche d'entrée du mélangeur statique. Ladite pâte et ledit solvant sont ainsi mis en contact dans ladite troisième canalisation. De façon avantageuse, l'extrémité de la deuxième canalisation (de circulation du solvant) est, à sa connexion avec ladite troisième canalisation, munie d'un répartiteur, par exemple en forme de pomme d'arrosoir ou d'étoile. L'extrémité de la première canalisation est alors agencée sur un côté de la troisième canalisation, de sorte que ladite pâte soit injectée autour dudit répartiteur.

Si nécessaire, afin de diminuer la viscosité de la pâte et d'optimiser le mélange au sein du mélangeur, la pâte et/ou le solvant sont introduits à chaud dans ledit mélangeur. Les récipients et/ou pompes et/ou canalisations sont alors munis de moyens de chauffage adéquats. Pour les mêmes raisons, le mélangeur statique peut être équipé de moyens de chauffage, tel un serpentin ou une double enveloppe assurant la circulation d'un fluide caloporteur.

En sortie du mélangeur statique, un bac est disposé pour recueillir le mélange sortant dudit mélangeur. Ce bac peut être conditionné en température par un moyen de chauffage ou de refroidissement selon les paramètres de température favorables à la décantation du mélange.

Les débits de la pâte chargée et du solvant, en entrée du dispositif muni d'un mélangeur statique, assurant le gavage dudit mélangeur, sont contrôlés par des manomètres, éventuellement couplés avec un moyen d'asservissement aux pompes ou pistons assurant lesdits débits.

L'invention concerne aussi un procédé de fabrication d'un matériau chargé (renfermant une charge solide dans une matrice) comprenant la préparation d'une pâte intermédiaire renfermant une charge solide et la transformation de ladite pâte intermédiaire en ledit matériau. Selon ledit procédé, au moins une partie de ladite pâte intermédiaire non transformée est traitée conformément au procédé de traitement d'une pâte décrit ci-dessus. Ladite pâte intermédiaire non transformée comprend, voire consiste généralement en, les déchets dudit procédé de fabrication (voir ci-dessus : déchets du type déchets *per se* ou rebuts).

Selon une variante, ladite pâte intermédiaire renferme, outre ladite charge solide, un pré-polymère liquide et au moins un agent de réticulation ; ladite transformation comprenant alors la réticulation dudit pré-polymère liquide. On peut ici tout-à-fait se trouver dans un contexte de fabrication de propergols ou explosifs à liant. On note toutefois que cette variante peut être mise en œuvre dans d'autres contextes, en fait dans tous contextes où une pâte chargée est destinée à être réticulée.

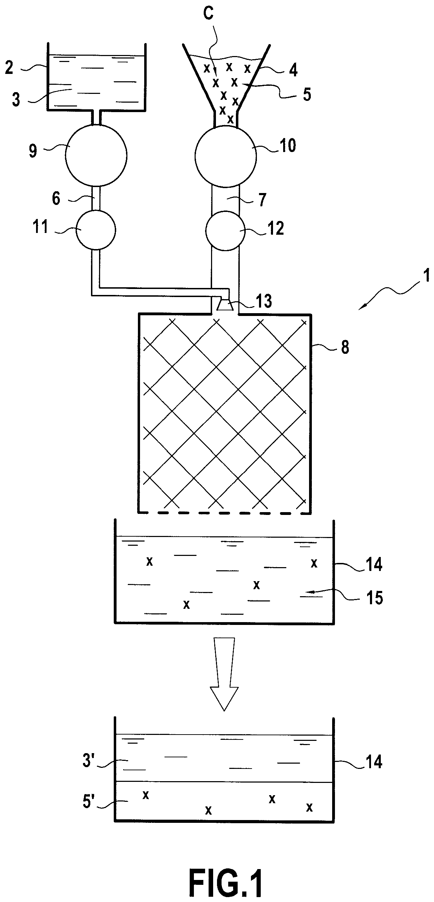

La figure 1 annexée illustre une variante de réalisation d'un dispositif convenant à la mise en œuvre du procédé de l'invention.

En référence à cette figure, le dispositif 1 comporte d'une part un récipient 2 recevant un solvant 3 et un récipient 4 recevant une pâte 5 ; ladite pâte 5 renfermant une charge solide C. Les éléments de ladite charge solide C sont symbolisés par des croix. Des canalisations 6 et 7 relient respectivement les récipients 2 et 4 à l'entrée d'un mélangeur statique 8. Des pompes 9 et 10 assurent respectivement l'injection sous pression dans les canalisations 6 et 7 du solvant 3 et de la pâte 5. Des manomètres 11 et 12 permettent de contrôler la pression d'injection dans les canalisations 6 et 7, et éventuellement d'ajuster le débit desdites pompes 9 et 10. L'extrémité de la canalisation 6, en entrée du mélangeur statique 8, est munie d'un répartiteur 13. L'extrémité de la canalisation 7, en entrée du mélangeur statique 8, est agencée de telle sorte que la pâte 5 soit distribuée autour dudit répartiteur 13. Un bac 14 de récupération est disposé en sortie du mélangeur statique 8. Ledit bac récupère le système bi-phasique 15. Après décantation, les deux phases de ce système bi-phasique sont séparées. En 5', on a montré le résidu solide de pâte 5 (qui renferme la fraction non dissoute de la charge (C)) et en 3' le solvant renfermant la fraction de la charge solide C dissoute (extraite).

Les éléments mécaniques du dispositif 1, montrés sur la figure 1, peuvent être chauffés au moyen de serpentins chauffants ou de doubles enveloppes à circulation de fluide caloporteur.

La mise en œuvre du procédé de l'invention au sein d'un dispositif tel que montré sur la figure 1 (mais ne comportant pas de répartiteur) a été réalisé dans les conditions suivantes :
- composition de la pâte : 68 % en masse de perchlorate d'ammonium, 14% en masse d'un polymère hydrocarboné (PBHT : polybutadiène hydroxy téléchélique) et additifs, 18 % aluminium ;
- température du mélangeur statique : 50 °C ; viscosité de la pâte à cette température : 1200 Pa.s ;
- débit de pâte : 1 kg/h (dont 680 g/h de perchlorate d'ammonium) ;
- débit d'eau (eau = solvant) : 10 l/h ;
- pression dans le mélangeur statique : 3. 10⁵ Pa (3 bars).

Après décantation du système bi-phasique, récupéré à l'issue de la mise en œuvre de la première étape du procédé de l'invention (mélange dans le mélangeur statique), on récupère une saumure contenant une concentration supérieure à 60 g/l de perchlorate d'ammonium dissout, et un résidu de pâte contenant moins de 5% en masse de perchlorate d'ammonium, teneur suffisamment faible pour que ledit résidu de pâte soit considéré non pyrotechnique.

## Revendications

1. Procédé de traitement d'une pâte (5) renfermant une charge solide (C) en vue de l'extraction d'au moins une partie de ladite charge solide (C), ladite charge solide (C) étant constituée de charges oxydantes choisies parmi des charges de perchlorate d'ammonium, de perchlorate de métal alcalin, de perchlorate de métal alcalino-terreux, de nitrate de métal alcalin, de nitrate de métal alcalino-terreux et leurs mélanges et/ou des charges explosives choisies parmi des charges de CL 20, d'octogène, d'hexogène, de tolite, de pentrite et leurs mélanges ; ledit procédé comprenant, mis en œuvre en continu :
- le mélange, dans un mélangeur statique (8), de ladite pâte (5) avec un solvant liquide (3), solvant de ladite au moins une partie de ladite charge solide (C), en vue de la solubilisation, au moins partielle, de ladite au moins une partie de ladite charge solide (C) dans ledit solvant (3);
- la récupération, à l'issue dudit mélange, d'un système bi-phasique (15) comprenant d'une part, une solution (3') renfermant au moins une fraction de ladite au moins une partie de ladite charge solide (C), solubilisée dans ledit solvant (3), et d'autre part, un résidu solide (5') de ladite pâte (5); puis
- la séparation de ladite solution (3') et dudit résidu solide (5') de ladite pâte (5).

2. Procédé selon la revendication 1, **caractérisé en ce que** ladite pâte (5) renfermant une charge solide (C) présente, dans les conditions de mise en œuvre du mélange, une viscosité comprise entre 50 et 2000 Pa.s.

3. Procédé selon la revendication 1 ou 2, **caractérisé en ce que** ladite pâte (5) et ledit solvant (3) sont introduits dans ledit mélangeur statique (8) sous pression.

4. Procédé selon l'une quelconque des revendications 1 à 3, **caractérisé en ce que** ladite pâte (5) et ledit solvant (3) sont introduits séparément ou ensemble, après une mise en contact, dans ledit mélangeur (8).

5. Procédé selon l'une quelconque des revendications 1 à 3, **caractérisé en ce que** ladite pâte (5) et ledit solvant (3) sont prémélangés avant leur introduction dans ledit mélangeur (8).

6. Procédé selon l'une quelconque des revendications 1 à 5, **caractérisé en ce qu'**il est mis en œuvre à température ambiante ou, au moins en partie, à une température supérieure à la température ambiante.

7. Procédé selon l'une quelconque des revendications 1 à 6, **caractérisé en ce que** la séparation de ladite solution (3') et dudit résidu solide (5') est mise en œuvre par décantation.

8. Procédé selon l'une quelconque des revendications 1 à 7, **caractérisé en ce qu'**il comprend, en outre, la récupération de ladite solution (3') séparée dudit résidu solide (5') par surverse.

9. Procédé selon l'une quelconque des revendication 1 à 8, **caractérisé en ce qu'**il comprend, en outre, un même traitement d'au moins une partie dudit résidu solide (5'), mis en œuvre indépendamment du traitement de ladite pâte (5) ou, après recyclage d'au moins une partie dudit résidu solide (5'), en même temps que le traitement de ladite pâte (5).

10. Procédé selon l'une quelconque des revendications 1 à 8, **caractérisé en ce qu'**il est mis en œuvre avec un premier solvant pour l'obtention dudit résidu solide et d'une solution refermant au moins une fraction d'une partie de ladite charge et **en ce qu'**il comprend, en outre, un même traitement dudit résidu solide obtenu avec un second solvant pour l'extraction d'au moins une fraction d'une autre partie de ladite charge.

11. Procédé selon l'une quelconque des revendications 1 à 10, **caractérisé en ce que** ledit solvant (3) est de l'eau ou un solvant organique, notamment choisi parmi l'acétate d'éthyle et l'acétone.

12. Procédé selon l'une quelconque des revendications 1 à 11, **caractérisé en ce que** ladite charge (C) est constituée de charges solides de perchlorate d'ammonium et **en ce que** ledit solvant (3) est de l'eau.

13. Procédé de fabrication d'un matériau chargé comprenant la préparation d'une pâte intermédiaire renfermant une charge solide et la transformation de ladite pâte intermédiaire en ledit matériau, **caractérisé en ce qu'**au moins une partie de ladite pâte intermédiaire non transformée est traitée conformément au procédé selon l'une quelconque des revendications 1 à 12.

14. Procédé selon la revendication 13, **caractérisé en ce que** ladite pâte renferme, outre ladite charge solide, un pré-polymère liquide et au moins un agent de réticulation et ce que ladite transformation comprend la réticulation dudit pré-polymère liquide.

## Patentansprüche

1. Verfahren zur Behandlung einer Paste (5), die einen festen Füllstoff (C) enthält, mit dem Ziel, zumindest einen Teil des festen Füllstoffs (C) zu extrahieren, wobei der feste Füllstoff (C) aus oxidierenden Füllstoffen besteht, die ausgewählt sind aus den Füllstoffen Ammoniumperchlorat, Alkalimetall-Perchlorat, Erdalkalimetall-Perchlorat, Alkalimetallnitrat, Erdalkalimetallnitrat und ihren Mischungen und/oder aus Sprengstoffen, die ausgewählt sind aus den Füllstoffen CL-20, Octogen, Hexogen, Tolit, Pentrit und ihren Mischungen, wobei das Verfahren, das kontinuierlich durchgeführt wird, umfasst:
- das Mischen der Paste (5) in einem statischen Mischer (8) mit einem flüssigen Lösungsmittel (3), welches zumindest einen Teil des festen Füllstoffs (C) löst, um zumindest die teilweise Auflösung des zumindest einen Teils des festen Füllstoffs (C) in dem Lösungsmittel (3) zu erzielen,
- nach dem Mischen die Gewinnung eines Zweiphasensystems (15), das einerseits eine Lösung (3'), die zumindest einen Anteil des zumindest einen Teils des in dem Lösungsmittel (3) aufgelösten festen Füllstoffs (C) enthält, und andererseits einen festen Rückstand (5') der Paste (5) enthält, und
- das Abscheiden der Lösung (3') und des festen Rückstands (5') der Paste (5).

2. Verfahren nach Anspruch 1, **dadurch gekennzeichnet, dass** die Paste (5), die einen festen Füllstoff (C) enthält, unter den Herstellungsbedingungen der Mischung eine Viskosität zwischen 50 und 2000 Pa.s aufweist.

3. Verfahren nach Anspruch 1 oder 2, **dadurch gekennzeichnet, dass** die Paste (5) und das Lösungsmittel (3) unter Druck in den statischen Mischer (8) eingeleitet werden.

4. Verfahren nach einem der Ansprüche 1 bis 3, **dadurch gekennzeichnet, dass** die Paste (5) und das Lösungsmittel (3) separat oder zusammen, nachdem sie miteinander in Kontakt gebracht wurden, in den Mischer (8) eingeleitet werden.

5. Verfahren nach einem der Ansprüche 1 bis 3, **dadurch gekennzeichnet, dass** die Paste (5) und das Lösungsmittel (3) vor ihrer Einleitung in den Mischer (8) miteinander vermischt werden.

6. Verfahren nach einem der Ansprüche 1 bis 5, **dadurch gekennzeichnet, dass** es bei Raumtemperatur oder zumindest teilweise bei einer über der Raumtemperatur liegenden Temperatur durchgeführt wird.

7. Verfahren nach einem der Ansprüche 1 bis 6, **dadurch gekennzeichnet, dass** das Abscheiden der Lösung (3') und des festen Rückstands (5') durch Dekantieren erfolgt.

8. Verfahren nach einem der Ansprüche 1 bis 7, **dadurch gekennzeichnet, dass** es ferner die Gewinnung der Lösung (3') umfasst, die von dem festen Rückstand (5') durch Überlaufen abgeschieden wird.

9. Verfahren nach einem der Ansprüche 1 bis 8, **dadurch gekennzeichnet, dass** es ferner die gleiche Behandlung zumindest eines Teils des festen Rückstands (5') umfasst, die unabhängig von der Behandlung der Paste (5) oder nach einer Rückführung zumindest eines Teils des festen Rückstands (5') gleichzeitig mit der Behandlung der Paste (5) durchgeführt wird.

10. Verfahren nach einem der Ansprüche 1 bis 8, **dadurch gekennzeichnet, dass** es mit einem ersten Lösungsmittel zur Gewinnung des festen Rückstands und einer Lösung durchgeführt wird, die zumindest einen Anteil eines Teils des Füllstoffs enthält, und dass es ferner die gleiche Behandlung des festen Rückstands, der mit einem zweiten Lösungsmittel zur Extraktion zumindest eines Anteils eines anderen Teils des Füllstoffs erhalten wird, umfasst.

11. Verfahren nach einem der Ansprüche 1 bis 10, **dadurch gekennzeichnet, dass** das Lösungsmittel (3) Wasser oder ein organisches Lösungsmittel, insbesondere ausgewählt aus Ethylacetat und Aceton, ist.

12. Verfahren nach einem der Ansprüche 1 bis 11, **dadurch gekennzeichnet, dass** der Füllstoff (C) aus festen Ammoniumperchlorat-Füllstoffen besteht und dass das Lösungsmittel (3) Wasser ist.

13. Verfahren zur Herstellung eines einen Füllstoff enthaltenden Materials, welches die Zubereitung einer einen festen Füllstoff enthaltenden Übergangspaste und die Umwandlung der Übergangspaste in das Material umfasst, **dadurch gekennzeichnet, dass** zumindest ein Teil der nicht umgewandelten Übergangspaste gemäß dem Verfahren nach einem der Ansprüche 1 bis 12 behandelt wird.

14. Verfahren nach Anspruch 13, **dadurch gekennzeichnet, dass** die Paste zusätzlich zu dem festen Füllstoff ein flüssiges Prepolymer und zumindest ein Vernetzungsmittel enthält und dass die Umwandlung die Vernetzung des flüssigen Prepolymers umfasst.

## Claims

1. A process for processing a paste (5) containing a solid charge (C) with a view to extracting at least one part of said solid charge (C), said solid charge (C) consisting of oxidizing charges chosen from charges of ammonium perchlorate, alkali metal perchlorate, alkaline earth metal perchlorate, alkali metal nitrate, alkaline earth metal nitrate and their mixtures and / or explosive charges chosen from charges of CL 20, octogen, hexogen, tolite, pentrite and their mixtures; said process comprising, continuously:
- mixing, in a static mixer (8), said paste (5) with a liquid solvent (3), which is a solvent for said at least one part of said solid charge (C), with a view to dissolving, at least partially, said at least one part of said solid charge (C) in said solvent (3);
- recovering, after said mixing, a two-phase system (15) comprising, on the one hand, a solution (3') containing at least one fraction of said at least one part of said solid charge (C), dissolved in said solvent (3), and, on the other hand, a solid residue (5') of said paste (5); and then
- separating said solution (3') from said solid residue (5') of said paste (5).

2. The process as claimed in claim 1, **characterized in that** said paste (5) containing a solid charge (C) has, under the conditions for carrying out the mixing, a viscosity of between 50 and 2000 Pa.s.

3. The process as claimed in claim 1 or 2, **characterized in that** said paste (5) and said solvent (3) are introduced into said static mixer (8) under pressure.

4. The process as claimed in any one of claims 1 to 3, **characterized in that** said paste (5) and said solvent (3) are introduced separately or together, after being brought into contact, into said mixer (8).

5. The process as claimed in any one of claims 1 to 3, **characterized in that** said paste (5) and said solvent (3) are premixed prior to introduction into said mixer (8).

6. The process as claimed in any one of claims 1 to 5, **characterized in that** it is carried out at ambient temperature or, at least partially, at a temperature above ambient temperature.

7. The process as claimed in any one of claims 1 to 6, **characterized in that** the separation of said solution (3') and of said solid residue (5') is carried out by settling out.

8. The process as claimed in any one of claims 1 to 7, **characterized in that** it further comprises recovering said solution (3') separated from said solid residue (5') via an overflow.

9. The process as claimed in any one of claims 1 to 8, **characterized in that** it further comprises the same processing of at least one part of said solid residue (5'), carried out independently of the processing of said paste (5) or, after recycling at least one part of said solid residue (5), at the same time as the processing of said paste (5).

10. The process as claimed in any one of claims 1 to 8, **characterized in that** it is carried out with a first solvent in order to obtain said solid residue and a solution containing at least one fraction of a part of said charge, and **in that** it also comprises the same processing of said solid residue obtained, with a second solvent for extracting at least one fraction of another part of said charge.

11. The process as claimed in any one of claims 1 to 10, **characterized in that** said solvent (3) is water or an organic solvent, in particular chosen from ethyl acetate and acetone.

12. The process as claimed in any one of claims 1 to 11, **characterized in that** said filler (C) consists of solid charges of ammonium perchlorate and **in that** said solvent (3) is water.

13. A process for producing a material containing charges, comprising the preparation of an intermediate paste containing a solid charge and the conversion of said intermediate paste into said material, **characterized in that** at least one part of said intermediate paste which has not been converted is processed in accordance with the process as claimed in any one of claims 1 to 12.

14. The process as claimed in claim 13, **characterized in that** said paste contains, in addition to said solid charge, a liquid prepolymer and at least one crosslinking agent and **in that** said conversion comprises the crosslinking of said liquid prepolymer.
